# EUROPÄISCHE PATENTANMELDUNG

(11) **EP 1 974 785 A2**
(43) Veröffentlichungstag der Anmeldung: **01.10.2008**
(21) Anmeldenummer: 08003882.1
(22) Anmeldetag: 03.03.2008
(51) Int. Cl.: B01D 33/04, B01D 33/50

(54) **Bandfilter**

(30) Priorität: 28.03.2007 DE 202007004536 U
(71) Anmelder: Leipoldt, Matthias, 08233 Treuen (DE)
(72) Erfinder: Leipoldt, Matthias, 08233 Treuen (DE)
(74) Vertreter: Helge, Reiner

(57) **Zusammenfassung**

Die Erfindung betrifft eine Vorrichtung zum Filtern in Form eines Bandfilters, welcher vorzugsweise als Vorfilter für eine Filteranlage zum Reinigen von verschmutzen Flüssigkeiten, wie beispielsweise verschmutztem Öl, Verwendung findet.

Die Aufgabe, bei einer derartigen Vorrichtung eine verbesserte Möglichkeit zum einen für den Filtrationsprozeß selbst und zum anderen für das Ablösen des Filterkuchens von dem endlosen Filterband zu schaffen wird dadurch gelöst, daß in einem ersten Bereich des 2 Filterband-Umlaufes unterhalb des Filterbandes 3 ein Vakuum-Absaugbereich 4 und sowie eine Luft-Ausblaseinheit 8, mit welcher der Filterkuchen 7 vom Filterband 3 abblasbar ist, angeordnet ist oder daß nahe dem Umlenkbereich 5, in dem Zwischenraum zwischen dem vorlaufenden und dem rücklaufenden Teil des Filterbandes 3, eine Luft-Ansaugeinheit 6, mit welcher Luft durch den anhaftenden Filterkuchen 7 und das Filterband 3 ansaugbar ist sowie eine Luft-Ausblaseinheit 8, mit welcher der Filterkuchen 7 vom Filterband 3 abblasbar ist, angeordnet ist.

## Beschreibung

Die Erfindung betrifft eine Vorrichtung zum Filtern in der Form eines Bandfilters, welcher vorzugsweise als Vorfilter für eine Filteranlage zum Reinigen von verschmutzen Flüssigkeiten, wie beispielsweise verschmutztem Öl, Verwendung findet.

Allgemein ist es bekannt, daß bei bandartigen Filtern, bei denen das Filterband als endloses Bandtrum ausgebildet ist, der angesetzte Filterkuchen von dem Filterband mittels Kratzer- oder Schabervorrichtungen entfernt werden kann.

Aus der DE 44 18 840 A1 ist eine Bandfilteranlage mit reinigbarem endlosem Filterband und einer Bypass-Spülung der Filtermulde bekannt, wobei in einer rinnenförmigen, rechtwinklig zur Bandtransportrichtung verlaufende Vertiefung der Filtermulde, ein im oberen Bereich von außen angelegter Bypass mit Düse angeordnet ist und zur Wasserspeisung des Bypasses die für die Bandreinigung zuständige Spülleitung einen Spülbalken aufweist.

In der DE 44 39 944 A1 wird eine Bandfiltereinrichtung zum Ausbringen von Fremdpartikeln aus Flüssigkeitsbädern beschrieben, wobei diese Einrichtung aus einer die Flüssigkeit aufnehmenden Badwanne, einem Filterband, das sich aus einem endlosen Umlauftraggurt mit Perforationen und einem Filterbandvlies zusammensetzt, das von einer Rolle abwickelbar und nach Gebrauch auf eine Rolle aufwickelbar ist. Das Filterbandvlies ist auf den Umlaufgurt auflegbar. In der Badwanne befindet sich eine Unterdruckkammer, die aus einer um eine horizontale Achse drehbar gelagerten Zylindertrommel besteht. Der Innenraum dieser Zylindertrommel bildet die Unterdruckkammer. Der Umfangsmantel der Zylindertrommel weist Ansaugöffnungen auf, und auf diese sind der Umlauftraggurt und/oder das Filterbandvlies auflegbar, die über Führungsrollen in die Badwanne ein- und wieder aus dieser herausgebracht werden.

Die DE 295 21 021 U1 gibt eine Förderband-Filtereinrichtung zur mechanischen Reinigung einer in einem Kanal oder dergleichen strömenden, mit Feststoffen verunreinigten Flüssigkeit mit einem endlosen Filterband, je einem beiderseits des Filterbandes vorgesehenen flexiblen Antriebsmittel, einem Rahmengestell, das die Umlenkelemente und das Filterband trägt, wobei jedes Filterelement an einem Kettenglied starr befestigt ist, wieder.

Die DE 198 36 728 B4 betrifft eine Vakuumbandfilter-Einrichtung zur Filtration von mit Spänen verunreinigten Kühlflüssigkeiten von spanenden Bearbeitungsmaschinen, mit einer Oberkammer, der die zu filtrierende Flüssigkeit zuführbar ist, an die ein Unterdruck anlegbar ist, sowie einem mit einer Vielzahl von Durchtrittsöffnungen versehenen und die Unterkammer von der Oberkammer abgrenzenden Siebboden, auf dessen der Oberkammer zugewandter Oberseite ein bandförmiges Filtertuch abstützbar und entlangführbar ist, auf dem mindestens eine Förderkette zum Austrag grober Späne angeordnet ist und durch dessen Poren die zu filtrierende Flüssigkeit unter Abscheidung der Verunreinigungen von der Oberkammer in die Unterkammer saugbar ist, wobei das Filtertuch in der Oberkammer auf den Siebboden zu und im beladenen Zustand wieder von dem Siebboden wegführbar ist, und wobei das Filtertuch in einem Einführbereich, in dem es auf den Siebboden zu bewegbar ist.

Der vorliegenden Erfindung liegt die Aufgabe zu Grunde, bei einer Vorrichtung zum Filtern, in Form eines Bandfilters, welche vorzugsweise als Vorfilter für eine Filteranlage zum Reinigen von verschmutzen Flüssigkeiten, wie beispielsweise verschmutztem Öl, dient, eine verbesserte Möglichkeit zum einen für den Filtrationsprozeß selbst und zum anderen für das Ablösen des Filterkuchens von dem endlosen Filterband zu schaffen.

Erfindungsgemäß wird diese Aufgabe dadurch gelöst, daß in einem ersten Bereich des Filterband-Umlaufes unterhalb des die zu filtrierende führende Flüssigkeit tragende Filterbandes ein Vakuum-Absaugbereich und sowie eine Luft-Ausblaseinheit, mit welcher der Filterkuchen vom Filterband abblasbar ist, angeordnet ist oder daß nahe dem Umlenkbereich, in dem Zwischenraum zwischen dem vorlaufenden und dem rücklaufenden Teil des Filterbandes, eine Luft-Ansaugeinheit, mit welcher Luft durch den anhaftenden Filterkuchen und das Filterband ansaugbar ist sowie eine Luft-Ausblaseinheit, mit welcher der Filterkuchen vom Filterband abblasbar ist, angeordnet ist.

Als einer der wesentlichen Vorteile dieser erfindungsgemäßen Lösung ist zu nennen, daß mit der Anordnung eines Vakuum-Absaugbereich im ersten Bereich des Filterband-Umlaufes der Filtrationsvorgang beschleunigt wird, so daß bei kleinerer Filterfläche eine größere Durchflußmenge realisierbar ist.

Ein weiterer Vorteil besteht darin, daß durch das Abblasen des Filterkuchens vom Filterband, das heißt keine mechanische Berührung mit festen Gegenständen, ein wesentlich geringerer Verschleiß des Filterbandes eintritt und somit die Materialdicke des Filterbandes selbst dünner ausgeführt sein kann.

Desweiteren wird auf Grund des Luftdurchsatzes der Trocknungsgrad des Filterkuchens erhöht.

Vorteilhafte Weiterbildungen und Ausgestaltungen der Erfindung sind aus den übrigen Unteransprüchen und aus dem nachfolgend an Hand der Zeichnungen prinzipmäßig beschriebenen Ausführungsbeispiel ersichtlich.

Es zeigen
- Figur 1 -: eine perspektivische Prinzipdarstellung der erfindungsgemäßen Vorrichtung zum Filtern,
- Figur 2 -: eine Prinzipdarstellung der erfindungsgemäßen Vorrichtung zum Filtern eine abgeänderte Ausführung.

In beiden Figuren ist die erfindungsgemäße Vorrichtung 1 zum Filtern, beispielsweise als Vorfilter für eine Filter- und Aufbereitungsanlage für Kühl- bzw. Bearbeitungsmedien, wie von Ölen normaler Viskosität, vorgesehen.
Das zu reinigende Öl, welches in diesem Fall mit feinen Metallteilchen und Schleifscheibenabrieb versetzt ist, wird in dem Bereich 2 auf das Filterband 3 aufgebracht und läuft, der Schwerkraft folgend, durch das Filterband 3 wobei sich ein aus den festen Bestandteilen und Ölresten bestehender Filterkuchen 7 zu bilden beginnt, welcher einen bestimmten Zeitabschnitt noch zunimmt; dann jedoch in einer konstanten Dicke auf dem Filterband 3 anhaftet.

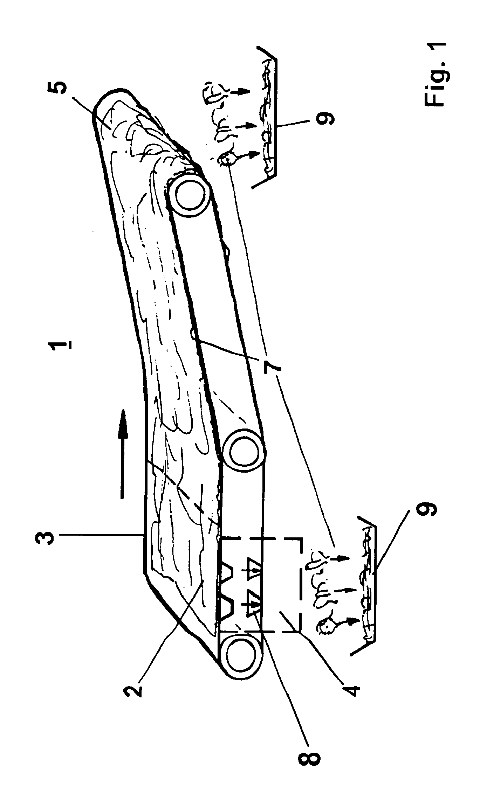

Bei der Darstellung gemäß **Figur 1** ist unterhalb dieses Aufgabebereiches 2 ein Vakuum-Absaugbereich 4 angeordnet. Mit Einsetzen des angelegten Unterdrucks wird die Durchflußenge des nunmehr weitest gehend gereinigten Öls erhöht. Das so vorgefilterte Öl wird, über einen vorgesehenen Abscheider aus dem Auffangbereich abgeführt und, entsprechend dem vorgesehenen Verwendungszweck, weiter aufbereitet oder den vorgesehenen Behältern zugeführt.

Mit dem Anlegen des Vakuums wird zwangsläufig der Filterkuchen 7 auf dem Filterband 3 verfestigt. Das Filterband 3 wird selbstverständlich bereits in dieser Filtrationsphase mit einer entsprechend gewählten Geschwindigkeit vorwärts bewegt, so daß der Filterkuchen 7 auf dem Filterband 3 abgeführt wird.
Mit dem Überschreiten des Umlenkbereiches 5 werden zunächst die nur locker am Filterband 3 anhaftenden Teile des Filterkuchens 7 vom Filterband 3 in ein vorgesehenes Sammelbehältnis 9 abfallen. Die fest anhaftenden Bestandteile des Filterkuchens 7 werden mit dem Filterband 3 bis in einen Bereich geführt, in welchem eine Luft-Ausblaseinheit 8 angeordnet ist. Hier wird der mit dem Anlegen des Vakuums erzeugte Luftstrom von Innen her durch das Filterband 3 hindurch geführt und die am Filterband 3 noch anhaftenden Bestandteile des Filterkuchens 7 werden vom Filterband 3 abgeblasen und ebenfalls in einem Sammelbehältnis 9 aufgenommen.

In vorteilhafter Weise ist die Luft-Ausblaseinheit 8 so ausgeführt, daß diese vollständig über die Breite des Filterbandes 3 reicht und längs dem Filterband 3 verschiebbar ist.

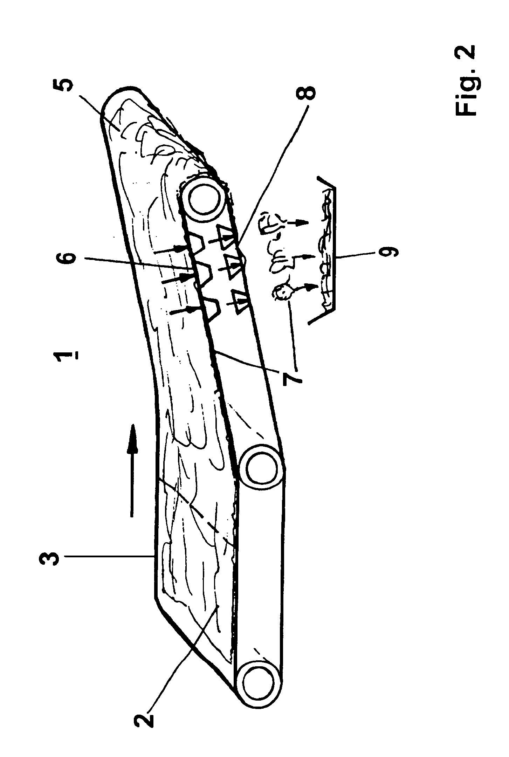

In einer anderen Ausführung der Vorrichtung 1 zum Filtern gemäß **Figur 2** wird das zu reinigende Öl ebenfalls in dem Bereich 2 auf das Filterband 3 aufgebracht und läuft auch hier, der Schwerkraft folgend, durch das Filterband 3 wobei sich der Filterkuchen 7 bildet. Durch die Vorwärtsbewegung des Filterbandes 3 wird der Filterkuchen 7 bis in den Umlenkbereich 5 gefördert. Hier ist eine Luft-Ansaugeinheit 6 unter dem Filterband 3 angeordnet. Die Ansaug-Lufteinlässe dieser Einheit sind dabei sowohl vollständig quer über die Breite des Filterbandes 3 als auch über eine bestimmte Länge des Filterbandes 3 angeordnet. In diesem Bereich wird Luft durch den Filterkuchen 7 und das Filterband 3 gezogen. Damit wird das noch vorhandene Öl aus dem Filterkuchen 7 entfernt, aufgefangen und, wie zuvor beschrieben, der vorgesehenen Verwendung zugeführt.

Nach Überschreiten des Umlenkbereiches 5 werden zunächst nur lockere Teile des Filterkuchens 7 von selbst vom Filterband 3 abfallen. Die verbleibenden, am Filterband 3 fest anhaftenden Bestandteile werden bis in den Bereich der Luft-Ausblaseinheit 8 mitgenommen.

Der über die Luft-Ansaugeinheit 6 angesaugte Luftstrom wird über vorgesehenen Düsenbereiche in der Luft-Ausblaseinheit 8 von Innen her durch das Filterband 3 hindurch geführt, so daß nur mittels dieses Luftstroms die noch am Filterband 3 anhaftenden Bestandteile des Filterkuchens 7 vom Filterband 3 abgeblasen werden. In vorteilhafter Weise kann diese Einheit so ausgeführt sein, daß dieser bei Bedarf weitere Ansaug-Lufteinlässe und/oder Düsenbereiche in der Luft-Ausblaseinheit 8 zugeordnet werden können. Der so vom Filterband 3 entfernte Filterkuchen 7 wird in einem vorgesehenen Sammelbehältnis 9 aufgenommen und nachfolgend einem entsprechenden Aufbereitungs- bzw. Entsorgungsprozeß unterzogen.

Auf Grund dessen, daß die Entfernung des Filterkuchens 7 vom Filterband 3 ohne jegliche mechanisch wirkenden Maschinenelemente, also im Wesentlichen nur durch das Abblasen von Innen durch das Filterband hindurch erfolgt kann die Dicke des Filterbandes 3 verhältnismäßig klein gehalten werden.

Mittels des Anlegens des Unterdruckes im Bereich 2 des Auftragens des zu reinigenden Öls bzw. des Ansaugen eines Luftstromes im Bereich vor dem Umlenkbereich 5 wird eine größere Durchflußmenge des zu filtrierenden Öls bei einer kleineren Filterfläche realisierbar.

### Bezugszeichenliste

- 1: Vorrichtung zum Filtern
- 2: Bereich des Auftragens der zu filtrierende Flüssigkeit
- 3: Filterband
- 4: Vakuum-Absaugbereich
- 5: Umlenkbereich
- 6: Luft-Ansaugeinheit
- 7: Filterkuchen
- 8: Luft-Ausblaseinheit
- 9: Sammelbehältnis für Filterkuchen

## Patentansprüche

1. Vorrichtung zum Filtern in der Form eines Bandfilters mit einem endlosen Filterband aus Gewebe,
**dadurch gekennzeichnet, daß**
mindestens in einem ersten Bereich (2), dem Bereich des Auftragens der zu filtrierende Flüssigkeit auf den Filterband-Umlauf, unterhalb des tragenden Filterbandes (3) ein Vakuum-Absaugbereich (4) und eine Luft-Ausblaseinheit (8), mit welcher der Filterkuchen (7) vom Filterband (3) abblasbar ist, angeordnet ist.

2. Vorrichtung zum Filtern in der Form eines Bandfilters mit einem endlosen Filterband aus Gewebe,
**dadurch gekennzeichnet, daß**
nahe des Umlenkbereiches (5), in dem Zwischenraum zwischen dem vorlaufenden und dem rücklaufenden Teil des Filterbandes (3), eine Luft-Ansaugeinheit (6), mit welcher Luft durch den anhaftenden Filterkuchen (7) und das Filterband (3) ansaugbar ist, und eine Luft-Ausblaseinheit (8), mit welcher der Filterkuchen (7) vom Filterband (3) abblasbar ist, angeordnet ist.

3. Vorrichtung zum Filtern in der Form eines Bandfilters mit einem endlosen Filterband aus Gewebe nach Anspruch 1 oder 2,
**dadurch gekennzeichnet, daß**
die Luft-Ansaugeinheit (6) und/oder die Luft-Ausblaseinheit (8) in dem Zwischenraum zwischen dem vorlaufenden und dem rücklaufenden Teil des Filterbandes (3), verschiebbar angeordnet sind.

4. Vorrichtung zum Filtern in der Form eines Bandfilters mit einem endlosen Filterband aus Gewebe,
**dadurch gekennzeichnet, daß**
die Luftein- bzw. -auslässe der Luft-Ansaugeinheit (6) bzw. der Luft-Ausblaseinheit (8) über die Breite des Filterbandes (3) reichend angeordnet sind.
